# EUROPEAN PATENT APPLICATION

(11) **EP 1 396 981 A1**
(43) Date of publication of application: **10.03.2004**
(21) Application number: 02388058.6
(22) Date of filing: 06.09.2002
(51) Int. Cl.: H04M 1/02

(54) **Portable electronic communications device provided with a projector**

(71) Applicant: Sony Ericsson Mobile Communications AB, 221 88 Lund (SE)
(72) Inventor: Henriksson, Michael, 246 52 Löddeköpinge (SE); Jensfeldt, Henrik, 212 14 Malmö (SE); Shintani, Eiji, 211 73 Malmö (SE); Wada, Joe, 211 16 Malmö (SE)
(74) Representative: Boesen, Johnny Peder

(57) **Abstract**

A portable electronic communications device comprising means for wireless communication. The electronic communications device is provided with at least one projector (5) for projecting an image (7) onto an external surface and with navigation and selecting means for navigating a pointer (11) in the projected image (7) and selecting a desired function. The device is not provided with a conventional display; hence, the only means provided in the portable electronic communications device for displaying the image (7) is the at least one projector (5) for projecting the image (7) onto an external surface.

## Description

### Technical area

The invention relates to a portable electronic communications device comprising means for wireless communication, said electronic communications device being provided with at least one projector for projecting an image onto an external surface and with navigation and selecting means for navigating a pointer in the projected image and selecting a desired function.

### Related prior art

WO 02/05518 discloses a portable electronic device of this type in the form of a mobile or cellular telephone with a built-in optical projector for displaying an image on an external surface. By projecting the image onto an external surface it is possible to show more data that is still readable than if the image is displayed on a conventional small LCD display provided on the mobile telephone.

Mobile telephones tend to be smaller and smaller while the requirements to functionality and possible operations increase. In line with this, the growing use of the Internet for exchanging data, such as e-mails, word-processed documents, graphics, photos and videos, has called for a demand for portable electronic communications devices, such as mobile or cellular telephones, that are able to display such data or images on a larger area for increasing the readability thereof. Conventional mobile telephones are provided with a small LCD display that is not able to show a full-page format of the image or data that is retrieved from the e.g. Internet. A solution to this problem is to subdivide each page into a number of smaller pages that can be individually shown on the built-in LCD display.

By the mobile telephone shown in WO 02/05518 it has become possible to display full-page images in readable form by projecting them onto an external surface, whereby a "virtual display" that is substantially larger than the conventional LCD display is created.

### Object of the invention

In the prior art device the mobile telephone is still provided with a conventional LCD display for displaying the image or a part thereof. Such LCD display requires space and delimits the minimum size of the mobile telephone. However, the desire for increasingly smaller portable electronic communications devices continues, and it is therefore an object of the invention to provide a portable electronic communications device that can be made even smaller than the ones known from the prior art.

### Summary of the invention

The object of the invention is achieved by configuring the portable electronic communications device in such manner that the only means provided in the portable electronic communications device for displaying the image is the at least one projector for projecting the image onto an external surface.

Thereby is achieved that the space required for a conventional LCD display is saved, and the size of the portable electronic communications device can be considerably reduced.

Preferably, the portable electronic communications device has an elongate body that is easily held in a hand and is suitable for use as e.g. a mobile telephone.

In a preferred embodiment the elongate body of the portable electronic communications device is pen-shaped, which makes it readily stored in a pocket or the like, and which entails that the portable electronic communications device may easily be structured for right-hand use as well as left-hand use.

The projector is preferably provided at a first end of the pen-shaped portable electronic communications device such that an image to be projected is emitted from the end of the pen-shaped device. By positioning the projector in this location the image can easily be projected onto a wall by holding the portable electronic communications device within one's hand and pointing towards wall. Likewise, if it is desired to project the image onto a piece of paper, the pen-shaped portable electronic communications device can be held like a pencil pointing towards the paper.

In a particularly preferred embodiment a camera is provided at a second end of the pen-shaped portable communications device opposite the first end with the projector. By providing a camera it is possible to take still photos or capture video sequences. Furthermore, by placing the camera in the end of the pen-shaped portable electronic communications device opposite that of the projector, it becomes particularly suitable to use the device for video conferences with the end with the camera pointing towards the user and the projector end pointing towards a wall for easy viewing of the other participant in the video conference.

In one embodiment the navigation and selecting means comprises a depressable track-ball provided at an outer surface of the portable electronic communications device. In another embodiment the navigation and selecting means comprises a depressable joystick provided at an outer surface of the portable electronic communications device. In either case the pointer provided in the projected image is easily manoeuvred to an icon or a button in the image, and by applying a downwardly directed pressure, the icon or button is activated.

A small status display may be provided on the outer surface of the portable electronic communications device, which small status display is adapted to show brief messages different from the projected image. The aim of such a small status display is to allow the user to quickly monitor the status of the portable electronic communications device or to view other relevant data or messages.

In a preferred embodiment the portable electronic communications device is a mobile telephone, and preferably the mobile telephone is provided with a key-pad that is visible via the projected image only, and that a key on the key-pad is activated by navigating the pointer to the key in the projected image and selecting it via the navigation and selecting means. Thereby the housing of the mobile telephone can be further reduced.

It shall be emphasised that the term "comprise/comprising" when used in this specification is taken to specify the presence of stated features, integers, steps or components but does not preclude the presence or addition of one or more other features, integers, steps components or groups thereof.

### Description of the drawings

The invention will be described in detail in the following with reference to the drawings in which
Fig. 1 shows a first embodiment of a portable electronic communications device according to the invention;
Fig. 2 shows the portable electronic communications device shown in Fig. 1 in another view;
Fig. 3 shows a second embodiment of a portable electronic communications device according to the invention; and
Fig. 4 shows a third embodiment of a portable electronic communications device according to the invention.

### Detailed description of an embodiment of the invention

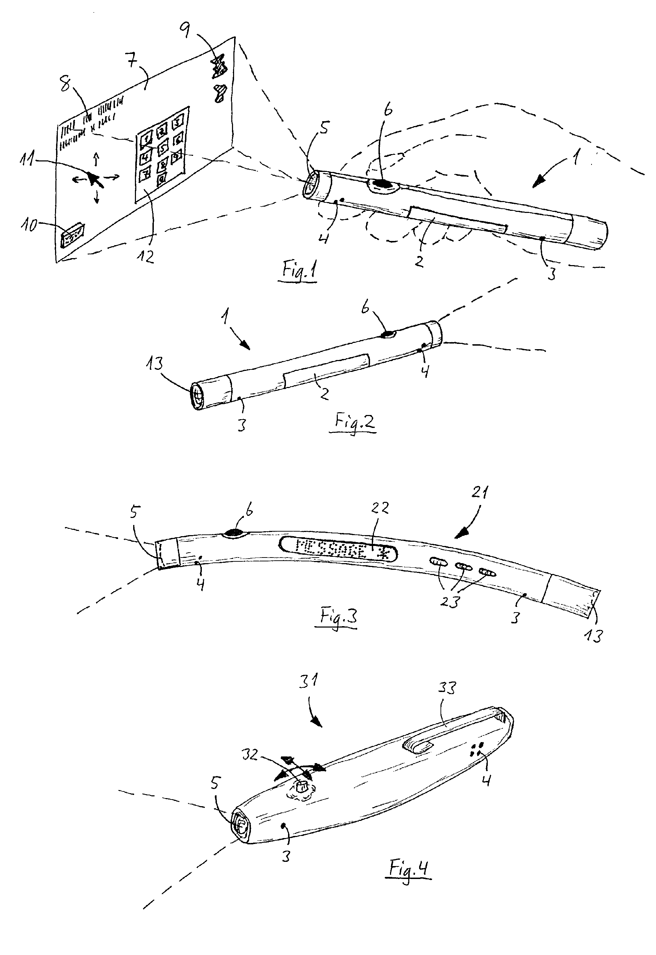

Fig. 1 shows a first embodiment of a portable electronic communications device according to the invention in the form of a mobile telephone 1. The shape and size of the mobile telephone 1 are considerably different from conventional mobile telephones, which is possible since the conventional LCD display has been dispensed with. The mobile telephone 1 is pen-shaped, i.e. it has an elongate body allowing it to be easily carried in a pocket or the like and also allowing it to be readily used and controlled when in use as indicated with broken lines in Fig. 1. In the embodiment shown in Figs 1 and 2 the elongate, pen-shaped body forms a straight, circular cylinder.

The pen-shaped mobile telephone 1 comprises means for wireless communication, i.e. a battery 2, an internal antenna (not shown), a microphone 3, a speaker 4 and internal electronic circuitry (not shown) interconnecting and controlling these components. Furthermore, the mobile telephone 1 is provided with a projector 5 at the first end thereof and navigation and selecting means in form of a depressable track-ball 6 which is well-known in the art of computer technology.

The mobile telephone 1 is not provided with any built-in display as conventional mobile telephones. On the contrary, with the mobile telephone 1 according to the invention it is only possible to view an image 7 by projecting it onto an external surface, such as a wall, a piece of paper, a hand or the like. The size of the image 7 can be varied by varying the distance between the mobile telephone 1 and the external surface and/or by adjusting the image-spreading characteristics of the projector 5. Therefore, the projected image 7 can be made sufficiently large to allow a full-page image 7 to be viewed without difficulties in reading any text-matter 8.

The image 7 may contain icons 9 and/or virtual buttons 10 generally known within computer technology. A cursor or pointer 11 is provided in the image 7, and the pointer 11 may be displaced on the image 7 as indicated by the four small arrows by manipulating the depressable track-ball 6 provided on the mobile telephone 1. Once the pointer 11 points on a desired icon 9 or virtual button 10, the associated function is activated by depressing the track-ball 6 as it is known in the art of computer technology.

Since the only button that is provided on the mobile telephone 1 is the depressable track-ball 6, a virtual key-pad 12 must also be included in the image 7, either directly or by choosing a relevant function, e.g. by selecting one of the icons 9. When the user makes a telephone call he/she navigates the pointer 11 to the virtual key-pad 12 and "dials" the number. After dialling the number, the speaker 4 of the mobile telephone 1 is put to the ear of the user, while the microphone 3 is directed towards the mouth, and normal telephone conversation is possible.

Fig. 2 shows the mobile telephone 1 shown in Fig. 1 from another perspective view with the opposite second end thereof to the left. The battery 2 as well as the microphone 3 and the speaker 4 are recognised again. The track-ball 6 is also visible and broken lines at the first right end of the mobile telephone 1 indicate projection of an image 7.

A camera 13 is preferably arranged at the second right end of the mobile telephone 1. The camera 13 may be arranged to take still photos only or it may be arranged to capture video sequences. The camera 13 may also be used in connection with a personal video conference, where the user points the camera 13 towards himself/herself while the image 7 - which in this case could show another participant in the video conference - is projected onto a wall and is visible to the user.

Figs 1 and 2 show a mobile telephone 1 according to the invention in a rather simple form and with a straight cylindrical shape. Fig. 3 shows a second embodiment of a portable electronic communications device according to the invention in the form of a mobile telephone 21 that, with regard to functionality, is very similar to the mobile telephone 1 shown in Figs 1 and 2, and the same reference numerals will be used for the same elements.

The mobile telephone 21 has a general outer shape of a curved circular cylinder. Like the mobile telephone 1, the mobile telephone 21 is provided with a microphone 3, a speaker 4, a projector 5, a track-ball 6 and a camera 13. In addition, the mobile telephone 21 is provided with a small status LCD display 22 that is able to show a brief message, but is much smaller than conventional displays on portable electronic communications devices and is much too small to be used as the only display when using the mobile telephone 21. The message could be an indication of the actual status of the mobile telephone 21, such as "on", "off", "phone mode", "battery low", etc or it could be any other relevant message.

The mobile telephone 21 is also provided with additional function keys 23. The function of these keys 23 may depend on the actual status of the mobile telephone 21, but activation of a key 23 might result in e.g. taking a picture with the camera 13, adjusting the volume of the speaker 4 or zooming in on or out of the projected image 7. Other functions may, of course, be ascribed to the additional function keys 23.

Fig. 4 shows a third embodiment of a portable electronic communications device according to the invention in the form of yet another mobile telephone 31. The mobile telephone 31 is designed rather differently from the mobile telephones 1 and 21, but it operates in substantially the same manner and the same reference numerals will be used again for the same elements. It is to be noted, however, that the mobile phone 31 may still be considered to be pen-shaped.

Like the mobile telephones 1 and 21, the mobile telephone 31 is provided with a microphone 3, a speaker 4 and a projector 5. Instead of a track-ball, a depressable joystick 32 is provided for navigating the pointer 11 in a projected image 7 and for selecting a desired function. The joystick 32 is depressable and is movable in four directions as indicated by the shown double-arrows. The mobile telephone 31 is provided with a clip 33 for easy carrying in a pocket or the like. The mobile telephone 31 may optionally be provided with a camera as it is the case with the mobile telephones 1 and 21.

Due to the size and shape of the mobile telephone 1,21,31 according to the invention it is equally useful for right-hand use - as shown with broken lines in Fig. 1 - as for left-hand use. In cases where the only activation is a track-ball 6 or a joystick 32 or any other suitable navigation and selecting means, all functions of the portable electronic communications device according to the invention are controlled by manoeuvring the pointer 11 to the desired icons or button and select these. Since the image 7 is projected onto an external surface, such as a wall or a piece of paper, the relatively large image size allows the projected image to be rather detailed such that operation and control of functions can be structured in a logical and easily accessible manner.

Of course, if the portable electronic communications device is provided with additional keys or buttons, as it is the case with the mobile telephone 21 shown n Fig. 3, short cuts to some functions can be achieved.

The invention has been described with reference to three different embodiments of a mobile telephone. However, it is to be understood that the portable electronic communications device according to the invention might as well be a PDA, a pager or any other type of portable electronic communications device.

## Claims

1. A portable electronic communications device comprising means for wireless communication, said electronic communications device being provided with at least one projector (5) for projecting an image (7) onto an external surface and with navigation and selecting means for navigating a pointer (11) in the projected image (7) and selecting a desired function, **characterised in that** the only means provided in the portable electronic communications device for displaying the image (7) is the at least one projector (5) for projecting the image (7) onto an external surface.

2. A portable electronic communications device according to claim 1, **characterised in that** the portable electronic communications device has an elongated body.

3. A portable electronic communications device according to claim 2, **characterised in that** the portable electronic communications device is pen-shaped.

4. A portable electronic communications device according to claim 3, **characterised in that** the projector (5) is provided at a first end of the pen-shaped portable electronic communications device.

5. A portable electronic communications device according to claim 4, **characterised in that** a camera (13) is provided at a second end of the pen-shaped portable communications device opposite the first end with the projector (5).

6. A portable electronic communications device according to any one of claims 1-5, **characterised in that** the navigation and selecting means comprises a depressable track-ball (6) provided at an outer surface of the portable electronic communications device.

7. A portable electronic communications device according to any one of claims 1-5, **characterised in that** the navigation and selecting means comprises a depressable joystick (32) provided at an outer surface of the portable electronic communications device.

8. A portable electronic communications device according to any one of claims 1-7, **characterised in that** that a status display (22) is provided on the outer surface of the portable electronic communications device, which status display (22) is adapted to show brief messages different from the projected image (7).

9. A portable electronic communications device according to any one of claims 1-8, **characterised in that** the portable electronic communications device is a mobile telephone (1;21;31).

10. A portable electronic communications device according to claim 9, **characterised in that** the mobile telephone (1;21;31) is provided with a key-pad (12) that is visible via the projected image (7) only, and that a key on the key-pad (12) is activated by navigating the pointer (11) to the key in the projected image (7) and selecting it via the navigation and selecting means.
